(19) **Europäisches Patentamt / European Patent Office / Office européen des brevets**

(11) **EP 2 387 788 B1**

(12) # FASCICULE DE BREVET EUROPEEN

(45) Date de publication et mention de la délivrance du brevet:
**13.01.2016 Bulletin 2016/02**

(21) Numéro de dépôt: **10706018.8**

(22) Date de dépôt: **13.01.2010**

(51) Int Cl.:
**H01F 1/153** *(2006.01)*   **H01F 41/02** *(2006.01)*

(86) Numéro de dépôt international:
**PCT/FR2010/050050**

(87) Numéro de publication internationale:
**WO 2010/081993 (22.07.2010 Gazette 2010/29)**

(54) **PROCÉDÉ DE FABRICATION D'UN NOYAU MAGNÉTIQUE EN ALLIAGE MAGNÉTIQUE AYANT UNE STRUCTURE NANOCRISTALLINE**

PROZESS ZUR HERSTELLUNG EINES AUS EINER MAGNETISCHEN LEGIERUNG MIT EINER NANOKRISTALLINEN STRUKTUR BESTEHENDEN MAGNETKERNS

PROCESS FOR MANUFACTURING A MAGNETIC CORE MADE OF A MAGNETIC ALLOY HAVING A NANOCRYSTALLINE STRUCTURE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **14.01.2009 EP 09305036**

(43) Date de publication de la demande:
**23.11.2011 Bulletin 2011/47**

(73) Titulaire: **Aperam Alloys Imphy**
**93200 Saint Denis (FR)**

(72) Inventeurs:
• **WAECKERLE, Thierry**
**F-58000 Nevers (FR)**

• **DEMIER, Alain**
**F-58640 Varennes Vauzelles (FR)**
• **CAQUARD, Christian**
**F-58270 Billy-chevannes (FR)**
• **JUHASZ, Robert**
**H-3295 Erk (HU)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A- 0 883 141    WO-A-2004/088681**
**FR-A- 2 733 376    US-B1- 7 042 310**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 387 788 B1**

**Description**

La présente invention est relative à un procédé de fabrication d'un noyau magnétique en alliage magnétique doux ayant une structure nanocristalline résultant du traitement thermique de nanocristallisation d'un alliage magnétique amorphe.

Pour la réalisation de certains équipements électriques comme les disjoncteurs différentiels destinés à détecter des défauts électriques sur des circuits électriques, on utilise des détecteurs constitués d'un noyau magnétique de forme torique constitué d'un alliage magnétique doux qui est traversé par le circuit sur lequel on veut détecter un éventuel défaut. Ce noyau magnétique est entouré d'un bobinage qui, lorsque le circuit à contrôler comporte un défaut, génère une tension qui déclenche un relais, lequel commande l'ouverture du circuit électrique. De tels disjoncteurs différentiels peuvent être conçus pour détecter des défauts symétriques, c'est-à-dire des défauts correspondant à un courant de fuite sinusoïdale sans composante continue. De tels disjoncteurs sont dits de classe AC.

Les noyaux magnétiques adaptés aux utilisations des disjoncteurs différentiels de classe AC doivent avoir, de préférence, des propriétés d'amplitude d'aimantation à 20° sous des champs compris entre 0,8 A/m et 1,5 A/m suffisantes, et qui en outre ont une stabilité en température de leurs propriétés également suffisante. D'une façon générale, on demande que, pour des excitations à 50 Hz, effectuées à 20 °C, l'amplitude d'aimantation $\Delta B_{sin}$ correspondant à des excitations sinusoïdales soit supérieure à 0,5 Tesla pour un champ H compris entre 0,8 A/m et 1,5A/m, et de préférence inférieure ou égale à 1,2 A/m, et pour une excitation redressée double alternance, une amplitude d'aimantation $\Delta B_{dyn}$ supérieure ou égale à 0,18 Tesla pour 2 valeurs de champ magnétique $H_1$ et $H_2$, toutes les deux comprises entre 0,3 et 2 A/m et ayant une différence de au moins 0,4 A/m. Par ailleurs, la variation de la perméabilité magnétique à 50 Hz pour un signal sinusoïdal, $\mu_z$ mesurée pour un champ de 0,8 A/m doit rester inférieur à 20% de la valeur obtenue à 20°C sur une plage de température allant de -25°C à +80°C.

Pour réaliser de tels noyaux magnétiques, on utilise notamment des alliages de type nanocristallin. De tels alliages sont des alliages pouvant être coulés sous forme de bandes très minces ayant une structure amorphe susceptible de devenir une structure nanocristalline, c'est-à-dire constituée essentiellement de cristaux très fins, de taille inférieure à 100 nm, et même inférieure à 25 nm, sous l'effet d'un traitement thermique dit de nanocristallisation. De tels alliages sont décrits par exemple dans EP 0 271 657.

Pour fabriquer un noyau magnétique en alliage nanocristallin, on commence par enrouler un ruban d'alliage magnétique amorphe de façon à constituer une bobine torique de section rectangulaire puis on soumet le tore ainsi constitué à un traitement thermique comprenant au moins un traitement de nanocristallisation, avec ou sans champ magnétique, destiné à conférer à l'alliage une structure nanocristalline. En général, ce traitement thermique comprend également un traitement de recuit postérieur au traitement de nanocristallisation et qui est destiné à optimiser les propriétés magnétiques de l'alliage.

Des procédés de fabrication d'un noyau magnétique en alliage magnétique ayant une structure nanocristalline sont décrits dans les documents US 7,042,310-B1, WO 2004/088681-A et EP 0 883 141-A.

Il est connu d'effectuer un traitement de nanocristallisation au cours duquel le noyau est soumis à un champ magnétique longitudinal, correspondant à un recuit comprenant un maintien à 560°C pendant 1 à 2 heures sous une atmosphère d'hydrogène ou plus généralement sous une atmosphère protectrice. Ce recuit de nanocristallisation est suivi d'un deuxième recuit sous champ magnétique transverse qui correspond à un maintien à une température comprise entre 260°C et 380°C pendant une durée allant de quelques minutes à 1 heure. Avec un tel traitement, il est possible d'obtenir des perméabilités relatives maximales sous champ sinusoïdal (50Hz) appelée $\mu_{r,z}^{max}$ très élevées et qui peuvent être supérieures à 450 000, mais avec des propriétés magnétiques ($\mu_{r,z}$, $\Delta B$) dont la stabilité en température est insuffisante. En ajustant les paramètres de recuit correspondant à ce traitement, il est possible d'obtenir des tores dont les propriétés magnétiques ont une stabilité en température suffisante, mais qui ont une perméabilité relative plus faible. De tels traitements nécessitent un refroidissement très rapide des tores après les traitements de recuit, ce qui engendre des contraintes de réalisation industrielle (inertie thermique des tores) difficiles à satisfaire. En outre, ce procédé présente une grande sensibilité à la qualité initiale des noyaux qui sont traités, de sorte que le taux de réussite de ces traitements thermiques est inférieur à 95%, ce qui est insuffisant.

On connaît un autre procédé de fabrication de tores magnétiques destinés à des applications dans des disjoncteurs différentiels de la classe AC, qui consiste à effectuer un traitement de nanocristallisation sous atmosphère à très bas point de rosée (inférieur à - 60°C), suivi d'un unique refroidissement extrêmement rapide à une vitesse de refroidissement supérieure à 300°C / h. Un tel traitement peut être réalisé en soumettant les tores à un champ magnétique pendant le recuit, ce qui permet d'obtenir le résultat satisfaisant avec des vitesses de refroidissement moins élevées que lorsqu'il n'y a pas de champ magnétique. Ce procédé présente l'inconvénient, lorsqu'il est utilisé en conditions industrielles, de nécessiter des installations permettant d'effectuer des refroidissements extrêmement brutaux de charges importantes. En outre, du fait des contraintes de réalisation, un tel traitement à un taux de réussite qui n'est pas satisfaisant, en général compris entre 30 et 50%.

On a également proposé de fabriquer des tores magnétiques nanocristallins en effectuant un traitement de nanocristallisation à basse température, c'est-à-dire entre 520°C et 530°C sans recuit sous champ magnétique. Ce procédé permet d'obtenir une haute perméabilité et conduit à une très bonne stabilité en température de l'amplitude d'aimantation ΔB et de la perméabilité magnétique relative, à condition que le tore soit souple à l'état amorphe. En effet, du fait de la basse température de nanocristallisation, la magnétostriction de l'alliage nanocristallin restent très supérieure à 0. Il s'ensuit qu'un bobinage trop serré du tore à l'état amorphe dégrade fortement ses performances lors de la nanocristallisation. Du fait de la difficulté qu'il y a à reproduire les conditions d'enroulage des tores et du collage des tores souvent effectué dans leur boîtier, ce procédé conduit à une dispersion importante des propriétés des tores obtenus. De ce fait, le taux de réussite de ce procédé reste en général très inférieur à 50%.

Le but de la présente invention est de remédier à ces inconvénients en proposant un procédé qui permet de fabriquer des noyaux magnétiques toriques en alliage magnétique doux nanocristallin, avec des propriétés adaptées à l'utilisation dans des disjoncteurs différentiels de la classe AC, et qui permet de fabriquer ces tores avec des taux de réussite supérieurs à 95%.

A cet effet, l'invention selon la revendication 1 a pour objet un procédé de fabrication d'un noyau magnétique en alliage magnétique ayant une structure nanocristalline résultant d'un traitement thermique d'un alliage magnétique amorphe susceptible d'acquérir une structure nanocristalline. Ce procédé comprend au moins un recuit sous champ magnétique longitudinal et au moins un recuit sous champ magnétique transversal, les deux recuits sous champ magnétique étant effectués sur le noyau ayant une structure nanocristalline, et les conditions de réalisation des recuits sous champ magnétique sont adaptées de telle sorte que le paramètre d'efficacité $E_{long}$ du recuit sous champ magnétique longitudinal et le paramètre d'efficacité $E_{trans}$ du recuit sous champ magnétique transversal sont tels que :

$$0,4 \times E_{long} + 130 \leq E_{trans} \leq 0,3\, E_{long} + 220$$

D'une façon générale, un recuit sous champ magnétique est un traitement thermique comprenant une montée en température jusqu'à une température de maintien Tm, un maintien à cette température et un refroidissement ; au cours de ce traitement, le noyau magnétique est soumis à un champ magnétique. Un tel traitement est caractérisé par un paramètre d'efficacité E égal à l'intégrale par rapport au temps t, de l'écart entre la température de traitement T(t) à l'instant t lorsque celle-ci est supérieure à 100°C et 100°C, sur la période pendant laquelle le champ magnétique appliqué a une intensité supérieure à une valeur minimale d'efficacité $H_{min}$ correspondant à la valeur minimale du champ magnétique nécessaire pour saturer magnétiquement le noyau magnétique, la température étant exprimée en °C et le temps étant exprimé en heures.

De préférence, les coefficients d'efficacité $E_{long}$ et $E_{trans}$ sont tous les deux supérieurs à 75.

Le procédé peut comprendre en outre un traitement thermique de nanocristallisation effectué sur le noyau à l'état amorphe, avant les recuits sous champ magnétique.

De préférence, l'alliage magnétique est un alliage dont la composition chimique comprend, en atomes % :

| | | | | | | |
|---|---|---|---|---|---|---|
| 0,5% | $\leq$ | Cu | $\leq$ | 1,5% | | |
| 2% | $\leq$ | Nb | $\leq$ | 4% | | |
| 13% | $\leq$ | Si | $\leq$ | 16,5% | | |
| 6% | $\leq$ | B | $\leq$ | 10% et mieux | $\leq$ | 8% |
| 0% | $\leq$ | Ni + Co | $\leq$ | 10% | | |

Le reste étant du fer et des impuretés résultant d'élaboration, la somme des teneurs en impuretés étant inférieure à 1%.

Le recuit de nanocristallisation peut comprendre un maintien entre 530°C et 600°C pendant une durée de 30min à 5h.

De préférence, le recuit sous champ magnétique longitudinal comprend un maintien pendant un temps compris entre 5min et 10h à une température maximale de traitement $T_{long}$ comprise entre 320°C et 600°C et en ce qu'on applique le champ magnétique longitudinal soit pendant toute la durée du maintien à la température de traitement $T_{long}$ soit durant une partie seulement de la durée de palier (en une seule fois ou par alternance de périodes avec champ magnétique et de périodes sans champ magnétique) pourvu que le palier se termine sous champ magnétique.

Après l'application du champ magnétique longitudinal, si la température du noyau est supérieure à 100°C, on refroidit le noyau jusqu'à une température inférieure ou égale à 100°C, à une vitesse moyenne de refroidissement de préférence supérieure à 300°C/h. Si le refroidissement est effectué sous champ magnétique, il n'y a pas de vitesse préférée de refroidissement.

De préférence, le recuit sous champ magnétique transversal comprend un maintien pendant un temps compris entre 30min et 3h à une température maximale de traitement $T_{trans}$ comprise entre 260°C et 400°C et on applique le champ magnétique transversal soit pendant le maintien à la température de traitement $T_{trans}$ soit durant une partie seulement de la durée de palier (en une seule fois ou par alternance de périodes avec champ magnétique et de périodes sans champ magnétique) pourvu que le palier se termine sous champ magnétique.

Après l'application du champ magnétique transversal, si la température du noyau est supérieure à 100°C, on refroidit le noyau jusqu'à une température inférieure ou égale à 100°C, à une vitesse moyenne de refroidissement de préférence supérieure à 300°C/h. Si le refroidissement est effectué sous champ magnétique, il n'y a pas de vitesse préférée de refroidissement.

De préférence, le traitement thermique de nanocristallisation comprend un maintien pendant un temps compris entre 1 h et 3h à une température maximale comprise entre 540°C et 600°C.

De préférence, le traitement de nanocristallisation est réalisé sous une atmosphère protectrice telle que l'ammoniac craqué, l'argon ou l'hydrogène.

De préférence, le recuit sous champ magnétique effectué en premier est un recuit sous champ magnétique longitudinal.

Le procédé peut comprendre plus de deux recuits sous champ magnétique, mais n'en comprend de préférence que deux.

Pour au moins un traitement sous champ magnétique, le champ magnétique peut être appliqué de façon continue, durant tout ou partie du palier au moins, durant aussi mais non nécessairement tout ou partie du chauffage et du refroidissement..

Le champ magnétique peut, également, être appliqué par intermittence.

La valeur minimale d'efficacité $H_{min}$ du champ magnétique est par exemple de $10 \cdot \dfrac{10^3}{4\pi}\,\text{A/m}$ (10e).

Dans ce qui précède, et par la suite également, on entend par « palier » de recuit, l'ensemble de la période du recuit pendant laquelle la température est supérieure à $10 \cdot \dfrac{10^3}{4\pi}$ (10 Oe).

Pendant ce « palier », la température n'est pas nécessairement constante, mais reste inférieure ou égale à la « température maximale de traitement », température maximale à laquelle le noyau est maintenu pendant le « temps de maintien ».

De préférence, le noyau magnétique est un tore obtenu par enroulement d'un alliage magnétique amorphe.

L'invention va maintenant être décrite de façon plus précise mais non limitative en regard des figures annexées dans lesquelles :

- la figure 1 est une vue en perspective d'un noyau torique en alliage nanocristallin ;
- la figure 2 est une représentation schématique dans un plan température temps, d'un traitement thermique de fabrication d'un tore magnétique en alliage nanocristallin ;
- la figure 3 est un schéma représentant dans un plan température, le paramètre d'efficacité d'un recuit sous champ magnétique d'un alliage nanocristallin ;
- la figure 4 est un graphique montrant la répartition d'exemples de traitement dans un plan « coefficient d'efficacité de recuit sous champ longitudinal/ coefficient d'efficacité du recuit sous champs transversal ».

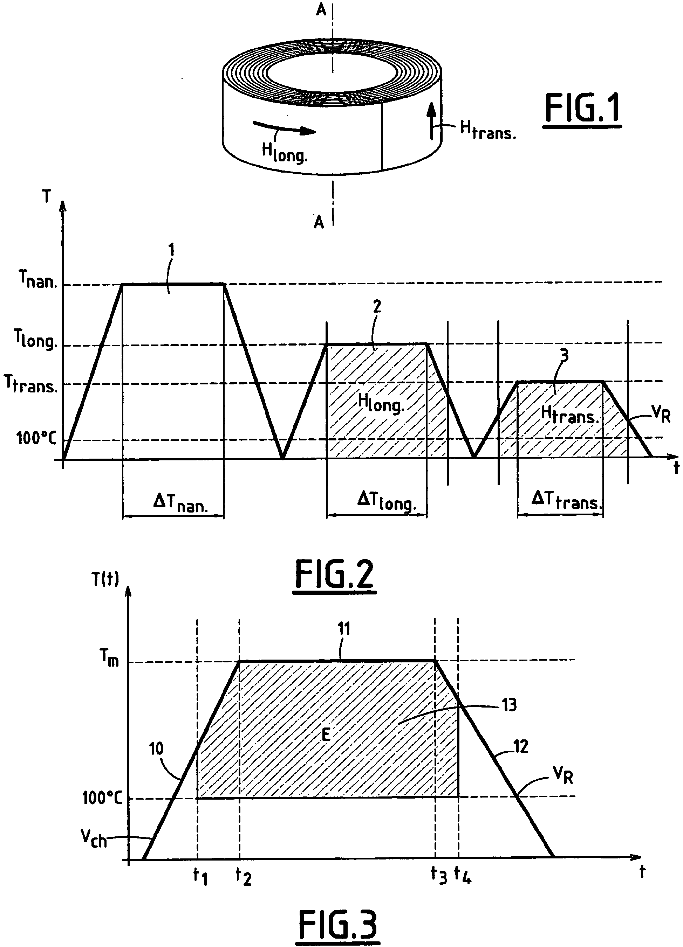

Le noyau magnétique torique, représenté à la figure 1, est constitué d'une bobine d'un ruban 1 d'un alliage magnétique susceptible d'acquérir une structure nanocristallin par traitement thermique. Cette bobine est réalisée initialement par enroulement d'un alliage à l'état amorphe puis elle est soumise à un traitement thermique destinée à lui conférer ses propriétés d'emploi définitives. Ce traitement thermique comporte de façon classique un premier recuit dit « recuit de nanocristallisation », destiné à transformer la structure de l'alliage pour lui conférer une structure nanocristalline, c'est-à-dire une structure qui comprend au moins 50% de grains de taille inférieure à 100 nm et mieux encore de taille inférieure à 25 nm. Ce recuit est suivi, comme cela sera expliqué plus en détail plus loin, d'au moins deux recuits sous champ magnétique qui sont destinés à optimiser les propriétés d'emploi du tore ainsi obtenu.

Comme représenté à la figure 1, le champ magnétique auquel peut être soumis le tore lors de ces recuits peut être soit un champ magnétique longitudinal, soit un champ magnétique transversal. Le champ magnétique longitudinal $H_{LONG}$ est un champ magnétique parallèle à la longueur du ruban et donc parallèle à la tangente au tore dans un plan perpendiculaire à l'axe du tore. Le champ magnétique transversal $H_{trans}$ est un champ magnétique parallèle à l'axe du tore, s'étendant selon la largeur du ruban.

L'alliage dont est constitué le ruban a en général une composition chimique définie de la façon suivante, en atomes % :

$$[Fe_{1-a}Ni_a]_{100-x-y-z-\alpha-\beta-\gamma}Cu_xSi_yB_zNb_\alpha M'_\beta M''_\gamma$$

avec $a \leq 0,3$ ; $0,6 \leq x \leq 1,5$ ; $10 \leq y \leq 17$ ; $5 \leq z \leq 14$ ; $2 \leq \alpha \leq 6$ ; $\beta \leq 7$ ; $\gamma \leq 8$ ; M' étant l'un au moins des éléments V, Cr, Al et Zn, M" étant l'un au moins des éléments C, Ge, P, Ga, Sb, In et Be.

De préférence, cet alliage est un alliage contenant principalement du fer dont une partie peut être substituée par du nickel ou du cobalt, à raison de au plus 10 atome %, et qui comprend en outre de 0,5 à 1,5 atome % de cuivre, de 2% à 4 atome % de niobium, de 13% à 16,5 atome % de silicium, de 6% à10 atome % et mieux de 6 à 8 atome % de bore. Le reste de la composition étant constituée d'impuretés dont la teneur est inférieure à 1%.

Pour conférer à ce noyau magnétique, les propriétés d'emploi recherchées, on effectue un traitement thermique qui est représenté schématiquement à la figure 2 et qui comporte un recuit 1 dit recuit de nanocristallisation destiné à conférer à l'alliage une structure nanocristalline, suivi d'un premier recuit sous champ magnétique repéré 2, et d'un deuxième recuit effectué sous champ magnétique, repéré 3. Les deux recuits sous champs magnétiques sont effectués à une température inférieure à la température maximale de nanocristallisation de l'alliage considéré. Un des deux recuits sous champ magnétique est effectué sous champ magnétique longitudinal et l'autre sous champ magnétique transversal. Dans l'exemple représenté à la figure 3, le premier recuit sous champ magnétique est effectué sous champ longitudinal et le deuxième l'est sous champ transversal. Mais, l'ordre de ces traitements thermiques peut être inversé.

Le recuit de nanocristallisation 1, comprend un maintien à une température $T_{NAN}$ compris entre 530°C et 600°C, et pendant un temps de maintien $\Delta t_{NAN}$ comprise entre 30 min et 5 h et de préférence entre 1 h et 3h. Les conditions particulières du traitement sont adaptées en fonction de la composition exacte de l'alliage. L'homme du métier sait faire cette adaptation.

Le premier recuit sous champ magnétique, effectué sous un champ magnétique longitudinal $H_{LONG}$ comprend un maintien à une température maximale de traitement $T_{LONG}$, comprise entre 100°C et 600°C, de préférence entre 320°C et 570°C et, mieux, entre 350°C et 550°C, pendant un temps $\Delta t_{LONG}$ compris entre 15min et 3h, et de préférence, compris entre 30 min et 2h.

Le deuxième recuit sous champ magnétique 3, effectué sous champ magnétique transverse $H_{TRANS}$, comporte un maintien à une température maximale de traitement $T_{TRANS}$ comprise entre 100°C et 600°C, de préférence entre 260°C et 400°C, et mieux, entre 280 et 360°C ; le temps de maintien à cette température, $\Delta t_{TRANS}$ est compris entre 30 min et 3 h.

Les traitements de recuit sous champ magnétique doivent être effectués dans les conditions telles que les noyaux sont soumis aux champs magnétiques au moins en fin de maintien à la température maximale $T_{TRANS}$ ou $T_{LONG}$ du recuit, et pendant une fraction du temps de palier qui peut être soit continu soit morcelé en périodes avec champ magnétique séparées par des périodes sans champ magnétique. C'est, en particulier, le cas des traitements dits « en rafale ».

En outre, comme le représente la figure 3, un recuit, sous champ longitudinal ou sous champ transversal, comporte une phase 10 de montée en température, une phase 11 de maintien, une phase 12 de refroidissement jusqu'à la température ambiante. Comme représenté sur cette figure, le tore peut être soumis à un champ magnétique transversal ou longitudinal à partir d'un instant $t_1$ qui peut être antérieur, comme représenté sur la figure, égal ou postérieur à l'instant $t_2$ à partir duquel le tore est maintenu à la température de maintien $T_m$.

La température est maintenue à cette valeur de température de maintien $T_m$ entre l'instant $t_2$ et l'instant $t_3$. A partir de l'instant $t_3$ le noyau est refroidi jusqu'à la température ambiante. Comme représenté sur la figure, le champ magnétique peut être maintenu jusqu'à un instant $t_4$ qui est postérieur à l'instant $t_3$ à partir duquel la température commence à décroître. Cependant, on notera que, à partir de l'instant où le tore n'est plus soumis à un champ magnétique, si la température du tore est supérieure à 100°C, celui-ci doit être refroidi à une vitesse de refroidissement supérieure à 300°C par heure au moins jusqu'à 100°C, de façon à ce que l'effet du traitement sous champ magnétique soit figé.

Par ailleurs, les inventeurs ont constaté que l'efficacité du traitement thermique pouvait être déterminée par un paramètre E d'efficacité égal à l'intégrale par rapport au temps, de l'écart entre la température instantanée T(t) et 100°C, lorsque la température T(t) est supérieure à 100°C, pendant toute la durée du maintien du champ magnétique à une valeur supérieure à la valeur minimale d'efficacité $H_{min}$ du champ magnétique. La valeur $H_{min}$ correspondant à la valeur minimale du champ magnétique nécessaire pour saturer magnétiquement les tores. Ce paramètre E peut s'écrire :

$$E = \int_{t1}^{t4} K(H(t)) \times L(T(t)) \times [T(t) - 100] dt$$

avec $K(H(t)) = 1$ si $H(t) \geq H_{min}$ et $= 0$ si $H(t) < H_{min}$
et $L(T(t)) = 1$ si $T(t) \geq 100°C$ et $L(T(t)) = 0$ si $T(t) < 100°C$
dans cette formule T(t) est la température à l'instant t et H(t) est l'intensité du champ magnétique à l'instant t.

Cette intégrale est représentée sur la figure par la zone hachurée 13.

Lorsque le chauffage se fait à une vitesse constante $V_{ch}$ jusqu'à une température de maintien Tm, que le maintien dure un temps tm, et que le refroidissement se fait à une vitesse constante Vr ;

- lorsque le champ magnétique n'est appliqué que pendant le maintien, et de façon continue à des valeurs telles que $H \geq H_{min}$, le coefficient d'efficacité E est :

$$E = (Tm - 100) \times tm$$

- lorsque le champ magnétique est appliqué pendant le maintien et pendant le refroidissement, et de façon continue à des valeurs telles que $H \geq H_{min}$, le coefficient d'efficacité E est :

$$E = (Tm - 100) \times tm + \tfrac{1}{2}(Tm - 100)^2 / Vr$$

- lorsque le champ magnétique est appliqué pendant tout le recuit (chauffage, maintien et refroidissement), et de façon continue à des valeurs telles que $H \geq H_{min}$, le coefficient d'efficacité E devient :

$$E = \tfrac{1}{2}(Tm - 100)^2 / Vch + (Tm - 100) \times tm + \tfrac{1}{2}(Tm - 100)^2 / Vr$$

Dans le traitement qui vient d'être décrit, le champ longitudinal et le champ transversal peuvent être soit des champs magnétiques maintenus constants soit des champs magnétiques pulsés. Leurs intensités sont déterminées de façon connue en elle-même de l'homme du métier. Elles sont propres à chaque installation de traitement thermique sous champ magnétique, et sont supérieure à la valeur minimale $H_{min}$ choisie de façon à saturer magnétiquement les tores durant les phases de recuit sous champ. Aussi, on considère que le temps pendant lequel le champ magnétique est appliqué est le temps pendant lequel le champ magnétique est supérieur à $H_{min}$. En général, $H_{min}$ est de l'ordre de

$$10 \cdot \frac{10^3}{4\pi} \, (10 \, Oe).$$

Lorsque le champ magnétique est pulsé, il peut être caractérisé par un ratio de temps effectif correspondant au rapport du temps pendant lequel $H > H_{min}$ au temps total pendant lequel le champ magnétique pulsé est appliqué. Aussi, en reprenant les trois exemples de formules ci-dessus, les coefficients d'efficacité E sont obtenus à partir de ceux qui sont indiqués par multiplication par le ratio de temps effectif qui vient d'être défini. Ce calcul est cohérent avec la formule générale indiquée précédemment.

Les conditions dans lesquelles on réalise ces champs magnétiques sont connues de l'homme du métier. Mais, les inventeurs ont constaté de façon nouvelle et inattendue que lorsque l'on effectuait deux recuits de qualité sous champ magnétique l'un étant sous champ magnétique longitudinal et l'autre sous champ magnétique transversal, postérieurs au traitement de nanocristallisation, on obtenait des propriétés satisfaisantes pour les noyaux magnétiques avec une excellente fiabilité, correspondant à un taux de réussite du traitement supérieur à 95%, en conditions industrielles.

Les inventeurs ont constaté que le recuit sous champ transversal pouvait être fait avant ou après le recuit sous champ longitudinal mais qu'il était cependant préférable d'effectuer le recuit sous champ longitudinal en premier.

Les inventeurs ont également constaté que, pour que les traitements sous champs magnétiques soient efficaces, il convenait que, pour le traitement sous champ longitudinal, le coefficient d'efficacité $E_{long}$ soit supérieur à 75 et de préférence inférieur à 6250, et que, pour le traitement sous champ transverse, le coefficient soit supérieur à 75 et de préférence inférieur à 3750.

En outre, les inventeurs ont constaté de façon inattendue que les résultats de propriétés d'emploi des noyaux magnétiques étaient adaptés à l'utilisation pour des disjoncteurs différentiels de la classe AC si et seulement si les coefficients d'efficacité $E_{LONG}$ et $E_{TRANS}$ des deux recuits sous champ longitudinal et sous champ transversal, satisfont à la condition suivante :

$$0{,}4 \times E_{LONG} + 130 \leq E_{TRANS} \leq 0{,}3 \times E_{LONG} + 220$$

Les inventeurs ont également constaté que les propriétés pouvaient être améliorées, ou la fiabilité du traitement pouvait être améliorée, si le traitement comprenait en outre un recuit supplémentaire sous champ longitudinal.

Enfin, on notera que le traitement de nanocristallisation peut également être réalisé sous champ magnétique (longitudinal ou transverse).

A titre d'exemple et de comparaison, on a réalisé des noyaux magnétiques constitués de tores en alliage du type Fe = 73,5 ; Cu = 1 ; Nb = 3 ; Si = 15,5 ; B = 7, (composition atomique) ayant un diamètre extérieur de 20 mm, un diamètre intérieur de 13 mm et une hauteur de 12 mm. Les tores ont été réalisés en bobinant des rubans à l'état amorphe, puis en soumettant les tores ainsi obtenus à des traitements thermiques qui comprenaient tous un traitement de nanocristallisation à une température de 560°C ou 575°C pendant 1h30 sous une atmosphère d'hydrogène, suivi d'un traitement de recuit sous champ longitudinal et d'un recuit sous champ transversal.

Dans tous les cas, le recuit sous champ longitudinal a comporté un chauffage en 2h jusqu'à une température $T_{LONG}$ de palier auquel les tores ont été maintenus pendant 1 h avec l'application d'un champ longitudinal, de 7900 A/m puis les tores ont été refroidis sous champ longitudinal pendant une heure jusqu'à la température de 90°C, puis ils ont été refroidis librement sans champ appliqué jusqu'à la température ambiante.

Les températures de maintien ont été de 350°C, de 400°C, de 450°C, de 500°C et 550°C.

Tous les recuits sous champ transversal ont comporté un chauffage en 2 h jusqu'à une température de maintien $T_{TRANS}$ à laquelle les tores ont été maintenus pendant 1 h avec l'application d'un champ magnétique transversal, de 7900 A/m. Puis, les tores ont été refroidis toujours sous le champ magnétique transversal en 1 h jusqu'à 90°C puis le refroidissement a été laissé libre sans champ magnétique jusqu'à la température ambiante.

Pour ce deuxième recuit sous champ transversal, les températures de maintien ont été de 280°C, 300°C, 320°C, 340°C, 360°C.

Après traitement, les noyaux magnétiques obtenus ont été caractérisés en courant continu par mesure du rapport Br/Bm de l'aimantation rémanente Br à l'aimantation maximale Bm, et en courant alternatif à 50Hz sous des ondes sinusoïdales ($_{SIN}$) ou redressées mono alternances ($_{STAT}$) et doubles alternances ($_{DYN}$) par des mesures à -25°C, + 20°C à + 100°C sous des champs magnétiques de 0,4 A/m, 0,8 A/m et 1,2 A/m, des grandeurs $\Delta B_{SIN}$, $\Delta B_{STAT}$, $\Delta B_{DYN}$, qui représentent les aimantations maximales obtenues pour chacune de ces sollicitations. En outre, on a mesuré le rapport de la perméabilité dynamique à la perméabilité sinusoïdale ($\mu_{DYN}/\mu_{SIN}$) pour un champ de 1,2 A/m à la température de 20°C. On a en outre mesuré la stabilité en température de la perméabilité en sinus à 50Hz, $\mu z$, pour un champ magnétique de 0,8 A/m d'une part entre -25°C et 20°C, et d'autre part entre 20°C et 100°C.

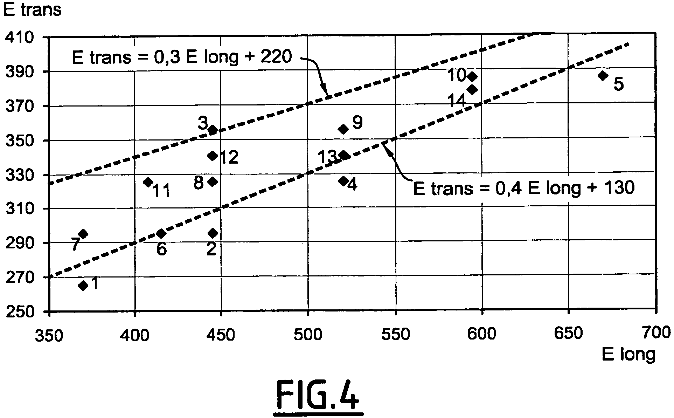

L'ensemble des résultats obtenus sur les échantillons 1 à 14 sont reportés au tableau 1 et les conditions de coefficients d'efficacité du traitement sont reportés à la figure 4.

Les exemples 7, 8, 9, 10, 11, 12, 13 et 14 qui satisfont aux conditions de coefficient d'efficacité du traitement telles qu'elles ont été indiquées, ont l'ensemble de leurs propriétés d'emploi qui répondent aux exigences imposées pour l'utilisation en tant que tore détecteur d'un disjoncteur différentiel de qualité AC.

En revanche, les exemples 1, 2, 3, 4, 5, 6 qui ne répondent pas aux conditions de coefficient d'efficacité, ont des propriétés qui ne sont pas satisfaisantes. A titre d'exemple, l'exemple 1 a une variation de ses propriétés entre +20°C et -25°C de 48%, et de 45% entre +20°C et +100°C, ce qui est beaucoup trop élevé. En outre, la variation d'aimantation dynamique sous un champ de 0,8 A/m ou sous un champ de 1,2 A/m est très insuffisante. De même pour l'exemple 2, la stabilité en température entre 20°C et 100°C est très insuffisante, puisqu'on constate un écart de 42% sur la perméabilité. En outre, l'amplitude de l'aimantation dynamique est également très insuffisante. Pour le contre exemple 3, bien que la stabilité en température soit satisfaisante et que l'amplitude d'aimantation dynamique soit satisfaisante, l'amplitude de l'aimantation sinusoïdale pour un champ de 1,2 A à 20°C est très insuffisante.

Le contre exemple 5 a une stabilité en température entre 20°C et 100°C qui est très insuffisante. En outre, l'amplitude de son aimantation dynamique sous un champ de 0,8 A /m est insuffisante. L'exemple 6 a une stabilité en température entre 20°C et 100°C très insuffisante et des amplitudes d'aimantation dynamiques aussi bien à 0,8 A/m que 1,2 A/m très insuffisante.

Comme on le voit, les conditions de traitement qui viennent d'être décrites, conformes à l'invention, permettent d'obtenir des propriétés satisfaisantes. En outre, les inventeurs ont constaté que le taux de réussite de ces traitements était dans des conditions industrielles supérieures à 95%.

Le procédé selon l'invention a l'avantage de permettre de très bien contrôler les performances des tores magnétiques de classe AC.

tableau 1

| N° exemple | $T_{long}$ | $T_{trans}$ | Br/Bm | $\mu_{dyn}\mu_{dyn}$ à 1,2A/m | Stab en Tre de $\mu$50Hz à 0,8A/m et -25°C (en%) | Stab en Tre de $\mu$50Hz à 0,8A/m et-20°C (en%) | $\Delta B_{sinus}$ à 1,2 A/m et 20°C (en T) | $\Delta B_{dyn}$ à 0,8 A/m et 20°C (enT) expl | $\Delta B_{dyn}$ à 1,2 A/m et 20°C (en T) expl | $E_{long}$ | $E_{trans}$ |
|---|---|---|---|---|---|---|---|---|---|---|---|
| 1 | 350 | 280 | 0,8 | 0,15 | 48 | -45 | 1,021 | 0,133 | 0,151 | 370 | 265 |
| 7 | 350 | 300 | 0,36 | 0,55 | -1,3 | -19 | 0,695 | 0,280 | 0,375 | 370 | 295 |
| 2 | 400 | 300 | 0,86 | 0,08 | 1,5 | -42 | 1,066 | 0,069 | 0,087 | 445 | 295 |
| 8 | 400 | 320 | 0,66 | 0,28 | -2,5 | -13 | 0,960 | 0,240 | 0,266 | 445 | 325 |
| 3 | 400 | 340 | 0,16 | 0,88 | -1,1 | -4 | 0,383 | 0,211 | 0,334 | 445 | 355 |
| 4 | 450 | 320 | 0,73 | 0,21 | -4,3 | -17,4 | 0,985 | 0,167 | 0,201 | 520 | 325 |
| 9 | 450 | 340 | 0,28 | 0,67 | -5,9 | 5,1 | 0,561 | 0,230 | 0,372 | 520 | 355 |
| 10 | 500 | 360 | 0,44 | 0,47 | -13,2 | 16,2 | 0,653 | 0,204 | 0,307 | 595 | 385 |
| 5 | 550 | 360 | 0,55 | 0,33 | -6,5 | -31 | 0,748 | 0,145 | 0,247 | 670 | 385 |
| 11 | 375 | 320 | 0,21 | 0,56 | -4,3 | -6,8 | 0,537 | 0,194 | 0,301 | 408 | 325 |
| 6 | 380 | 300 | 0,81 | 0,11 | 1,5 | -25,5 | 1,010 | 0,094 | 0,114 | 415 | 295 |
| 12 | 400 | 330 | 0,46 | 0,47 | -6,6 | -4,5 | 0,684 | 0,220 | 0,319 | 445 | 340 |
| 13 | 450 | 330 | 0,46 | 0,24 | -9,2 | 2 | 0,819 | 0,199 | 0,266 | 520 | 340 |
| 14 | 500 | 355 | 0,61 | 0,23 | -15,9 | -7,7 | 0,888 | 0,202 | 0,269 | 595 | 378 |

En outre, il permet de proposer des tores nanocristallin ayant à 20°C une variation de l'amplitude d'aimantation dynamique pour des ondes 50Hz double alternance toujours supérieurs à 0,2 Tesla pour une plage de champ magnétique H1-H2 distante d'au moins 0,4 A/m et comprise entre 0,3 et 1,5 A/m. Cette propriété permet à la fois de disposer, même en courant pulsé, d'une énergie importante pour déclencher le disjoncteur et la sécurité électrique et, grâce à la plage de champ H1-H2, d'obtenir une bonne aptitude au design du transformateur de défaut électrique réalisé à partir du tore. En outre, et surtout, ce procédé permet d'obtenir un taux de réussite très important supérieur à 95%, dans des fours industriels, sans qu'il soit nécessaire d'utiliser des technologies de refroidissement puissantes autres que celles qui sont nécessaires pour contrôler la production de chaleur générée par la réaction de nanocristallisation qui est une réaction exo-thermique.

**Revendications**

1.  Procédé de fabrication d'un noyau magnétique en alliage magnétique ayant une structure nanocristalline résultant d'un traitement thermique de nanocristallisation d'un alliage magnétique amorphe susceptible d'acquérir une structure nanocristalline par traitement thermique, l'alliage ayant une composition chimique définie de la façon suivante, en atomes % :

    $$[Fe_{1-a}Ni_a]_{100-x-y-z-\alpha-\beta-\gamma}Cu_xSi_yB_zNb_\alpha M'_\beta M''_\gamma$$

    avec $a \leq 0,3$ ; $0,6 \leq x \leq 1,5$ ; $10 \leq y \leq 17$ ; $5 \leq z \leq 14$ ; $2 \leq \alpha \leq 6$ ; $\beta \leq 7$ ; $\gamma \leq 8$, M' étant l'un au moins des éléments V, Cr, Al et Zn, M" étant l'un au moins des éléments C, Ge, P, Ga, Sb, In et Be, de préférence comprenant, en atomes % :

    | | | | | |
    |---|---|---|---|---|
    | 0,5% | ≤ | Cu | ≤ | 1,5% |
    | 2% | ≤ | Nb | ≤ | 4% |
    | 13% | ≤ | Si | ≤ | 16,5% |
    | 6% | ≤ | B | ≤ | 10% |
    | 0% | ≤ | Ni + Co | ≤ | 10% |

    le reste étant du fer et des impuretés résultant d'élaboration, la somme des teneurs en impuretés étant inférieure à 1%, **caractérisé en ce qu'**il comprend au moins un recuit sous champ magnétique longitudinal et au moins un recuit sous champ magnétique transversal, les deux recuits sous champ magnétique étant effectués sur le noyau d'alliage ayant une structure nanocristalline, le recuit sous champ magnétique longitudinal ayant un coefficient d'efficacité $E_{long}$ et le recuit sous champ magnétique transversal ayant un coefficient d'efficacité $E_{trans}$, le paramètre d'efficacité $E_{long}$ du recuit sous champ magnétique longitudinal et le paramètre d'efficacité $E_{trans}$ du recuit sous champ magnétique transversal étant tels que :

    $$0,4 \times E_{long} + 130 \leq E_{trans} \leq 0,3 E_{long} + 220$$

    un recuit sous champ magnétique est un traitement thermique comprenant une montée en température jusqu'à une température de maintien Tm, un maintien à cette température et un refroidissement, au cours de ce traitement thermique, le noyau magnétique est soumis à un champ magnétique, le paramètre d'efficacité E d'un recuit sous champ magnétique est égal à l'intégrale par rapport au temps t, de l'écart entre la température de traitement T(t) à l'instant t lorsque celle-ci est supérieure à 100°C et 100°C, sur la période pendant laquelle le champ magnétique appliqué a une intensité supérieure à une valeur minimale d'efficacité $H_{min}$ correspondant à la valeur minimale du champ magnétique nécessaire pour saturer magnétiquement le noyau magnétique, la température étant exprimée en °C et le temps étant exprimé en heures.

2.  Procédé selon la revendication 1, dans lequel les coefficients d'efficacité $E_{long}$ et $E_{trans}$ sont, tous les deux, supérieurs à 75.

3.  Procédé selon la revendication 1 ou la revendication 2, comprenant un traitement thermique de nanocristallisation effectué sur le noyau à l'état amorphe, avant les recuits sous champ magnétique.

4.  Procédé selon l'une quelconque des revendications 1 à 3, dans lequel le recuit sous champ magnétique effectué en premier est un recuit sous champ magnétique longitudinal.

5. Procédé selon la revendication 1, dans lequel l'alliage a une composition chimique comprenant, en atomes % :

| | | | | |
|---|---|---|---|---|
| 0,5% | $\leq$ | Cu | $\leq$ | 1,5% |
| 2% | $\leq$ | Nb | $\leq$ | 4% |
| 13% | $\leq$ | Si | $\leq$ | 16,5% |
| 6% | $\leq$ | B | $\leq$ | 10% |
| 0% | $\leq$ | Ni + Co | $\leq$ | 10% |

le reste étant du fer et des impuretés résultant d'élaboration, la somme des teneurs en impuretés étant inférieure à 1%, et dans lequel le recuit sous champ magnétique longitudinal comprend un maintien pendant un temps compris entre 5min et 10h à une température maximale de traitement $T_{long}$, comprise entre 320°C et 600°C et on applique le champ magnétique longitudinal au moins pendant la fin du maintien à la température de traitement $T_{long}$.

6. Procédé selon la revendication 5, dans lequel après l'application du champ magnétique longitudinal, si la température du noyau est supérieure à 100°C, on refroidit le noyau jusqu'à une température inférieure ou égale à 100°C, à une vitesse moyenne de refroidissement supérieure à 300°C/h.

7. Procédé selon l'une quelconque des revendications 5 ou 6, dans lequel le recuit sous champ magnétique transversal comprend un maintien pendant un temps compris entre 30min et 3h à une température maximale de traitement $T_{trans}$ comprise entre 260°C et 400°C et on applique le champ magnétique transversal au moins pendant la fin du maintien à la température de traitement $T_{trans}$.

8. Procédé selon la revendication 7, dans lequel, après l'application du champ magnétique transversal, si la température du noyau est supérieure à 100°C, on refroidit le noyau jusqu'à une température inférieure ou égale à 100°C, à une vitesse moyenne de refroidissement supérieure à 300°C/h.

9. Procédé selon l'une quelconque des revendications 5 à 8, dans lequel le traitement thermique de nanocristallisation comprend un maintien pendant un temps compris entre 30min et 5h à une température maximale comprise entre 530°C et 600°C.

10. Procédé selon la revendication 9, dans lequel le traitement de nanocristallisation est réalisé sous une atmosphère protectrice telle que l'ammoniac craqué, l'argon ou l'hydrogène.

11. Procédé selon l'une quelconque des revendications 1 à 10, comprenant trois recuits sous champ magnétique.

12. Procédé selon l'une quelconques des revendications 1 à 11, dans lequel pour au moins un traitement sous champ magnétique, le champ magnétique est appliqué de façon continue.

13. Procédé selon l'une quelconque des revendications 1 à 11, dans lequel le champ magnétique est appliqué par intermittence.

14. Procédé selon l'une quelconque des revendications 1 à 13, dans lequel la valeur minimale d'efficacité $H_{min}$ du champ magnétique est de $10 \cdot \dfrac{10^3}{4\pi} A/m$ (10 Oe).

15. Procédé selon l'une quelconque des revendications précédentes, dans lequel le noyau magnétique est un tore obtenu par enroulement d'un alliage magnétique amorphe.

**Patentansprüche**

1. Verfahren zur Herstellung eines Magnetkerns aus magnetischer Legierung mit einer nanokristallinen Struktur als Ergebnis einer thermischen Nanokristallisationsbehandlung einer amorphen magnetischen Legierung, die imstande ist, eine nanokristalline Struktur durch thermische Behandlung zu erhalten, wobei die Legierung eine chemische Zusammensetzung hat, die folgendermaßen definiert ist, in At.-%:

$$[Fe_{1-a}Ni_a]100_{-x-y-z-\alpha-\beta-\gamma}Cu_xSi_yB_zNb_\alpha M'_\beta M''_\gamma$$

mit $a \leq 0,3$; $0,6 \leq x \leq 1,5$; $10 \leq y \leq 17$; $5 \leq z \leq 14$; $2 \leq \alpha \leq 6$; $\beta \leq 7$; $\gamma \leq 8$; wobei M' mindestens eines der Elemente V, Cr, Al und Zn ist, wobei M" mindestens eines der Elemente C, Ge, P, Ga, Sb, In und Be ist, umfassend vorzugsweise, in At.-%:

| | | | | |
|---|---|---|---|---|
| 0,5 % | ≤ | Cu | ≤ | 1,5 % |
| 2 % | ≤ | Nb | ≤ | 4 % |
| 13 % | ≤ | Si | ≤ | 16,5 % |
| 6 % | ≤ | B | ≤ | 10 % |
| 0 % | ≤ | Ni+Co | ≤ | 10 % |

wobei der Rest Eisen und Unreinheiten im Ergebnis der Herstellung ist, wobei die Summe der Gehalte an Unreinheiten unter 1 % ist,
**dadurch gekennzeichnet, dass** es mindestens ein Glühen unter Längsmagnetfeld und mindestens ein Glühen unter Quermagnetfeld umfasst, wobei die zwei Glühvorgänge unter Magnetfeld auf dem Legierungskern durchgeführt werden, der eine nanokristalline Struktur hat, wobei das Glühen unter Längsmagnetfeld einen Wirksamkeitskoeffizienten $E_{long}$ und das Glühen unter Quermagnetfeld einen Wirksamkeitskoeffizienten $E_{trans}$ hat, wobei der Wirksamkeitsparameter $E_{long}$ des Glühens unter Längsmagnetfeld und der Wirksamkeitsparameter $E_{trans}$ des Glühens unter Quermagnetfeld derart sind, dass:

$$0,4 \times E_{long} + 130 \leq E_{trans} \leq 0,3\, E_{long} + 220$$

wobei ein Glühen unter Magnetfeld eine thermische Behandlung ist, die einen Temperaturanstieg auf eine Haltetemperatur Tm, ein Halten auf dieser Temperatur und ein Abkühlen umfasst, wobei der Magnetkern bei dieser thermischen Behandlung einem Magnetfeld ausgesetzt ist,
wobei der Wirksamkeitsparameter E eines Glühens unter Magnetfeld gleich dem Integral im Verhältnis zur Zeit t der Differenz zwischen der Behandlungstemperatur T(t) zum Zeitpunkt t ist, wenn diese über 100 °C und 100 °C ist, über den Zeitraum, in welchem das angewendete Magnetfeld eine höhere Stärke als ein minimaler Wirksamkeitswert $H_{min}$ hat, der dem minimalen Wert des Magnetsfelds entspricht, das notwendig ist, um den Magnetkern magnetisch zu sättigen, wobei die Temperatur in °C und die Zeit in Stunden ausgedrückt wird.

2.  Verfahren nach Anspruch 1, wobei die Wirksamkeitskoeffizienten $E_{long}$ und $E_{trans}$ beide größer als 75 sind.

3.  Verfahren nach Anspruch 1 oder Anspruch 2, das eine thermische Nanokristallisationsbehandlung, durchgeführt auf dem Kern in amorphem Zustand, vor den Glühvorgängen unter Magnetfeld umfasst.

4.  Verfahren nach einem der Ansprüche 1 bis 3, wobei das Glühen unter Magnetfeld, das zuerst durchgeführt wird, ein Glühen unter Längsmagnetfeld ist.

5.  Verfahren nach Anspruch 1, wobei die Legierung eine chemische Zusammensetzung hat, die in At.-% umfasst:

| | | | | |
|---|---|---|---|---|
| 0,5 % | ≤ | Cu | ≤ | 1,5 % |
| 2 % | ≤ | Nb | ≤ | 4 % |
| 13 % | ≤ | Si | ≤ | 16,5 % |
| 6 % | ≤ | B | ≤ | 10 % |
| 0 % | ≤ | Ni+Co | ≤ | 10 % |

wobei der Rest Eisen und Unreinheiten im Ergebnis der Herstellung ist, wobei die Summe der Gehalte an Unreinheiten unter 1 % ist,
und wobei das Glühen unter Längsmagnetfeld ein Halten während einer Zeit zwischen 5 Minuten und 10 Stunden inklusive auf einer maximalen Bearbeitungstemperatur $T_{long}$ zwischen 320 °C und 660 °C inklusive umfasst und das Längsmagnetfeld mindestens am Ende des Haltens auf der Bearbeitungstemperatur $T_{long}$ angewendet wird.

6. Verfahren nach Anspruch 5, wobei, nach der Anwendung des Längsmagnetfelds, wenn die Temperatur des Kerns über 100 °C ist, der Kern bis auf eine Temperatur unter oder gleich 100 °C mit einer mittleren Abkühlgeschwindigkeit über 300 °C/h abgekühlt wird.

7. Verfahren nach einem der Ansprüche 5 oder 6, wobei das Glühen unter Quermagnetfeld ein Halten während einer Zeit zwischen 30 Minuten und 3 Stunden inklusive auf einer maximalen Bearbeitungstemperatur $T_{trans}$ zwischen 260 °C und 400 °C inklusive umfasst und das Quermagnetfeld mindestens am Ende des Haltens auf der Bearbeitungstemperatur $T_{trans}$ angewendet wird.

8. Verfahren nach Anspruch 7, wobei, nach der Anwendung des Quermagnetfelds, wenn die Temperatur des Kerns über 100 °C ist, der Kern bis auf eine Temperatur unter oder gleich 100 °C mit einer mittleren Abkühlgeschwindigkeit über 300 °C/h abgekühlt wird.

9. Verfahren nach einem der Ansprüche 5 bis 8, wobei die thermische Nanokristallisationsbehandlung ein Halten während einer Zeit zwischen 30 Minuten und 5 Stunden inklusive auf einer maximalen Temperatur zwischen 530 °C und 600 °C inklusive umfasst.

10. Verfahren nach Anspruch 9, wobei die Nanokristallisationsbehandlung unter einer Schutzatmosphäre wie gecracktes Ammoniak, Argon oder Wasserstoff durchgeführt wird.

11. Verfahren nach einem der Ansprüche 1 bis 10, das drei Glühvorgänge unter Magnetfeld umfasst.

12. Verfahren nach einem der Ansprüche 1 bis 11, wobei für mindestens eine Behandlung unter Magnetfeld das Magnetfeld kontinuierlich angewendet wird.

13. Verfahren nach einem der Ansprüche 1 bis 11, wobei das Magnetfeld intermittierend angewendet wird.

14. Verfahren nach einem der Ansprüche 1 bis 13, wobei der minimale Wirksamkeitswert $H_{min}$ des Magnetfelds

$10 \cdot \dfrac{10^3}{4\pi}$ A/m (10 Oe) beträgt.

15. Verfahren nach einem der vorangehenden Ansprüche, wobei der Magnetkern ein Torus ist, der durch Wickeln einer amorphen Magnetlegierung erhalten wird.

## Claims

1. A method for manufacturing a magnetic core in a magnetic alloy having a nanocrystallization structure resulting from a nanocrystallization heat treatment of an amorphous magnetic alloy capable of acquiring a nanocrystalline structure by heat treatment, having a chemical composition defined in the following way, in atomic %:

$$[Fe_{1-a}Ni_a]100\text{-}x\text{-}y\text{-}z\text{-}\alpha\text{-}\beta\text{-}\gamma Cu_x Si_y B_z Nb_\alpha M'_\beta M''_\gamma$$

with $a \le 0.3$, $0.6 \le x \le 1.5$, $10 \le y \le 17$, $5 \le z \le 14$, $2 \le \alpha \le 6$, $\beta \le 7$, $\gamma \le 8$, M' being at least one of the elements V, Cr, Al and Zn, M" being at least one of the elements C, Ge, P, Ga, Sb, In and Be,
preferably comprising in atomic %:

| | | | | |
|---|---|---|---|---|
| 0.5% | $\le$ | Cu | $\le$ | 1,5% |
| 2% | $\le$ | Nb | $\le$ | 4% |
| 13% | $\le$ | Si | $\le$ | 16,5% |
| 6% | $\le$ | B | $\le$ | 10% |
| 0% | $\le$ | Ni + Co | $\le$ | 10% |

the remainder being iron and impurities resulting from the elaboration, the sum of the impurity contents being less than 1%,

**characterized in that** it comprises at least one annealing under a longitudinal magnetic field and at least one annealing under a transverse magnetic field, both annealings under a magnetic field being carried out on the core of an alloy having a nanocrystalline structure, the annealing under longitudinal magnetic field having an efficiency coefficient $E_{long}$ and the annealing under a transverse magnetic field having an efficiency coefficient $E_{trans}$, the efficiency parameter $B_{long}$ of the annealing under a longitudinal magnetic field and the efficiency parameter $E_{trans}$ of the annealing under a transverse magnetic field being such that:

$$0.4 \times E_{long} + 130 \leq E_{trans} \leq 0.3\, E_{long} + 220$$

annealing under a magnetic field is a heat treatment comprising a rise in temperature up to a holding temperature Tm, maintaining this temperature and cooling, during this heat treatment, the magnetic core being subject to a magnetic field,

the efficiency parameter E of an annealing under a magnetic field is equal to the integral relatively to time of the difference between the treatment temperature T(t) at instant t, when the latter is above 100°C, and 100°C, over the period during which the applied magnetic field has an intensity greater than a minimum efficiency value $H_{min}$ corresponding to the minimum value of the magnetic field required for magnetically saturating the magnetic core, the temperature being expressed in °C and the time being expressed in hours.

2. The method according to claim 1, wherein the efficiency coefficients $E_{long}$ and $E_{trans}$ are both greater than 75.

3. The method according to claim 1 or claim 2, comprising a nanocrystallization heat treatment carried out on the core in the amorphous state, before the annealings under a magnetic field.

4. The method according to any of claims 1 to 3, wherein the annealing under a magnetic field carried out first is an annealing under a longitudinal magnetic field.

5. The method according to any of claims 1 to 4, wherein the alloy has a chemical composition comprising in atomic %:

| 0.5% | $\leq$ | Cu | $\leq$ | 1,5% |
|---|---|---|---|---|
| 2% | $\leq$ | Nb | $\leq$ | 4% |
| 13% | $\leq$ | Si | $\leq$ | 16,5% |
| 6% | $\leq$ | B | $\leq$ | 10% |
| 0% | $\leq$ | Ni + Co | $\leq$ | 10% |

the remainder being iron and impurities resulting from the elaboration, the sum of the impurity contents being less than 1%,

and wherein the annealing under a longitudinal magnetic field consists of maintaining for a time comprised between 5mins and 10hrs a maximum treatment temperature $T_{long}$, comprised between 320°C and 600°C and in that the longitudinal magnetic field is applied at least during the end of the maintaining of the treatment temperature $T_{long}$.

6. The method according to claim 5, wherein, after applying the longitudinal magnetic field, if the temperature of the core is above 100°C, the core is cooled down to a temperature of less than or equal to 100°C, at an average cooling rate of more than 300°C/hr.

7. The method according to any of claims 5 or 6, wherein the annealing under a transverse magnetic field consists of maintaining for a time comprised between 30mins and 3hrs a maximum treatment temperature $T_{trans}$ comprised between 260°C and 400°C and the transverse magnetic field is applied at least during the end of the maintaining of the treatment temperature $T_{trans}$.

8. The method according to claim 7, wherein, after applying the transverse magnetic field, if the temperature of the core is above 100°C, the core is cooled down to a temperature of less than or equal to 100°C, at an average cooling rate of more than 300°C/hr.

9. The method according to any of claims 5 to 8, wherein the nanocrystallization heat treatment consists of maintaining for a time comprised between 30mins and 5hrs, a maximum temperature comprised between 530°C and 600°C.

10. The method according to claim 9, wherein the nanocrystallization treatment is carried out under a protective atmosphere such as cracked ammonia, argon or hydrogen.

11. The method according to any of claims 1 to 10, comprising three annealings under a magnetic field.

12. The method according to any of claims 1 to 11, wherein for at least one treatment under a magnetic field, the magnetic field is applied continuously.

13. The method according to any of claims 1 to 11, wherein the magnetic field is applied intermittently.

14. The method according to any of claims 1 to 13, wherein the maximum efficiency value $H_{min}$ of the magnetic field is

$$10 \cdot \frac{10^3}{4\pi} \text{ A/m (10 Oe).}$$

15. The method according to any of the preceding claims, wherein the magnetic core is a torus obtained by winding an amorphous magnetic alloy.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0271657 A
- US 7042310 B1
- WO 2004088681 A
- EP 0883141 A